# EUROPEAN PATENT APPLICATION

(11) **EP 4 383 556 A1**
(43) Date of publication of application: **12.06.2024**
(21) Application number: 22212594.0
(22) Date of filing: 09.12.2022
(51) Int. Cl.: H02P 27/04

(54) **A METHOD AND AN ARRANGEMENT FOR IDENTIFICATION OF LATERAL VIBRATION CHARACTERISTICS OF AN ELECTRIC MACHINE**

(71) Applicant: ABB SCHWEIZ AG, 5400 Baden (CH)
(72) Inventor: Holopainen, Timo, 00380 Helsinki (FI); Ryyppö, Tommi, 00380 Helsinki (FI); Szucs, Aron, 00380 Helsinki (FI)
(74) Representative: Kolster Oy Ab

(57) **Abstract**

The invention relates to the field of electric drive devices and electric machines, such as electric drive motors and electric generators for industrial applications, and more particularly to a method and an arrangement for identification of lateral vibration characteristics of an electric machine. The arrangement for identification of lateral vibration characteristics of an electric machine according to the present invention comprises a frequency converter (11), one or more vibration sensors (21-22, 41, 51) and an electric machine (12), wherein said frequency converter (11) is arranged for producing torsional excitation, said torsional excitation effecting lateral vibration in said electric machine; and wherein said one or more vibration sensors (21-22, 41, 51) comprise an at least one lateral vibration sensor (21-22, 41, 51) arranged for measuring the lateral vibration from said electric machine as excitation response and for producing lateral vibration data.

## Description

### FIELD OF THE INVENTION

The present invention relates to the field of electric drive devices and electric machines, such as electric drive motors and electric generators for industrial applications, and more particularly to a method and an arrangement for identification of lateral vibration characteristics of an electric machine.

### BACKGROUND OF THE INVENTION

Electric drive arrangements are widely used for industrial applications, e.g. for providing and controlling electrical power and energy to various public and industrial applications as well as for driving and controlling various public and industrial applications. Electric drives are used in industry for different applications, such as for driving motors within the transportation industry, for driving different devices within the process and manufacturing industry as well as within the energy industry. There are applications commonly used for electric drives within the transportation industry for example in metro and railway traffic applications as well as in ship propulsion unit applications of the marine industry. Within the process and manufacturing industry, electric drives can be used for example in conveyer applications, in mixer applications or even in paper machine applications. Within the energy industry, electric drives can be used for example as electric drives for wind turbines of the wind power industry.

Electric drives for electric machines, such as for electric motors and electric generators, may be divided into DC drives (DC, direct current) and AC drives (AC, alternating current). E.g. in a DC motor of a DC drive, a magnetic field is generated by the current through the field winding in the stator. This magnetic field is always maintained at right angles to the field generated by the armature winding. In this way, a DC motor's torque is generated, which torque can then be easily controlled in a DC drive by changing the armature current and keeping the magnetizing current constant. In a DC drive, also the DC motor speed can be controlled directly through armature current.

Within electric drives, the AC drives may further be divided into frequency-controlled AC drives, flux-vector-controlled AC drives and into AC drives utilising direct torque control (DTC, Direct Torque Control). In flux-vector-controlled AC drives and in direct torque control AC drives the torque of the three-phase motor or generator can be controlled, whereas in frequency-controlled AC drives the driven/driving machine dictates the torque level.

In electric machines, the foundations of an electric machine may vary significantly. Modes of an electric machine, such as natural modes determine the vibration behaviour of the system on site conditions. These modes are closely related to potential excessive vibrations and development of faults in electric machines. The foundation of an electric machine changes the natural modes and frequencies of this electric machine compared to the rigid foundation during the Factory Acceptance Test (FAT). This effect is most clear in low frequencies up to 150 Hz. The natural modes are closely related to the potential excessive vibrations on site conditions, and these vibrations are connected to the development of faults in electric machines. If modes are known in site conditions, the vibration behaviour can be predicted, and the potential risks identified. Identifying potential risks is beneficial in predictive condition monitoring and diagnostics.

Currently, a typical prior art method identification of vibration characteristics of an electric machine is carried out with a kit of hard- and software, i.e. a modal testing kit. These testing kits are used for impulse testing of the dynamic behaviour of mechanical structures by striking the object with an impact hammer and measuring the resulting response with accelerometers. The hammer imparts a force over a broad frequency range, which depends on the type of tip used. The hammer typically has an integral, constant current quartz force sensor mounted on the striking end of the hammer head. The sensor converts the impact force into electrical signal for display and analysis.

Typically, in a prior art solution for identification of vibration characteristics of an electric machine, the vibration excitation is given by a test hammer and the vibrations of the electric machine are measured by transducers. The data is analyzed by a spectrum analyzer. The obtained spectra must be post-processed to reach modal parameters, i.e. the natural modes and frequencies, and damping.

One prior art solution for identification of vibration characteristics of an electric machine as to identify the natural frequencies of an electric machine is a coast-down testing. In the coast-down testing, the resonance frequencies are connected to the corresponding natural modes based on experience or calculation models.

There are several problems with prior art solutions for identification of vibration characteristics, in particular the lateral vibration characteristics of an electric machine. First significant drawback with prior art solutions in site conditions is that the modal testing requires a qualified person with a special equipment.

Another major problem is that the modal testing is difficult to carry out in operational condition. This is the reason it is currently used mainly in serious trouble shooting cases. Currently, the on-line modal testing is mostly not used. The trouble with coast-down testing is that usually the coupling must be opened in order to enable a solo-machine coast-down run.

In today's demanding environment, there is a need for a more efficient and easier solution for a method and an arrangement for identification of lateral vibration characteristics of an electric machine and a need for a solution for an electric machine, the condition of which can be more efficiently maintained. There is a demand in the market for a method and an arrangement for identification of lateral vibration characteristics of an electric machine that would be more efficient and easier to carry out in operational condition than the current prior art solutions.

### BRIEF DESCRIPTION OF THE INVENTION

The object of the invention is to introduce a method and an arrangement for identification of lateral vibration characteristics of an electric machine and for a solution for an electric machine, the condition of which can be more efficiently maintained. Advantageous embodiments are furthermore presented.

It is brought forward a new method for identification of lateral vibration characteristics of an electric machine, in which method torsional excitation is produced by a frequency converter, said torsional excitation effecting lateral vibration in said electric machine; and lateral vibration of excitation response from said electric machine is measured by one or more vibration sensors as lateral vibration data.

In a preferred embodiment, lateral vibration characteristics of the electric machine are identified with the help of said lateral vibration data and excitation data, said excitation data comprising data of the produced torsional excitation.

In a preferred embodiment, one or more frequency response functions are generated utilizing said lateral vibration data and excitation data, said excitation data comprising data of the produced torsional excitation; and lateral vibration characteristics of the electric machine are identified with the help of said lateral vibration data and said generated one or more frequency response functions.

In a preferred embodiment, said torsional excitation comprises torsional excitation in the form of an impulse, random noise, pseudo random noise, a harmonic torsional excitation or a harmonic torsional excitation sweep.

In a preferred embodiment, said lateral vibration characteristics of the electric machine comprise the modal parameters of the electric machine.

In a preferred embodiment, the condition of the electric machine is analysed and determined utilizing said identified lateral vibration characteristics of the electric machine.

Furthermore, it is brought forward a new arrangement for identification of lateral vibration characteristics of an electric machine, said arrangement comprising a frequency converter, one or more vibration sensors and an electric machine, wherein said frequency converter is arranged for producing torsional excitation, said torsional excitation effecting lateral vibration in said electric machine; and wherein said one or more vibration sensors comprise an at least one lateral vibration sensor arranged for measuring the lateral vibration from said electric machine as excitation response and for producing lateral vibration data.

In a preferred embodiment, said at least one lateral vibration sensor is arranged to measure lateral vibration at least in the horizontal direction.

In a preferred embodiment, said frequency converter is arranged for identifying the lateral vibration characteristics of the electric machine with the help of said lateral vibration data and excitation data, said excitation data comprising data of the produced torsional excitation.

In a preferred embodiment, said frequency converter is arranged for generating one or more frequency response functions utilizing said lateral vibration data and excitation data, said excitation data comprising data of the produced torsional excitation; and for identifying the lateral vibration characteristics of the electric machine with the help of said lateral vibration data and said generated one or more frequency response functions.

In a preferred embodiment, said one or more vibration sensors comprise one or more vibration sensors attached to the bearing/bearings of said electric machine.

In a preferred embodiment, said frequency converter comprises a data gathering unit arranged for gathering data, said gathered data including control data for said electric machine and lateral vibration data of said electric machine; and a data analysis unit arranged for analysing said gathered data and for identifying the lateral vibration characteristics of said electric machine and/or the condition of said electric machine.

In a preferred embodiment, said arrangement comprises a data analysis system, and wherein said frequency converter comprises a data gathering unit arranged for gathering data, said gathered data including control data for said electric machine and lateral vibration data of said electric machine; and a connection unit arranged for transmitting said gathered data to said data analysis system, wherein said data analysis system is arranged for analysing said gathered data and for identifying the lateral vibration characteristics of said electric machine and/or the condition of said electric machine.

In a preferred embodiment, said arrangement comprises a user apparatus, and wherein said connection unit arranged for transmitting said gathered data to said data analysis system via said user apparatus, and wherein said user apparatus is arranged for receiving lateral vibration data of said electric machine from said one or more vibration sensors and for receiving said gathered data from said connection unit and for forwarding said gathered data to said data analysis system.

Furthermore, it is brought forward a new frequency converter of an arrangement for identification of lateral vibration characteristics of an electric machine, said arrangement comprising a frequency converter, one or more vibration sensors and an electric machine, wherein said frequency converter is arranged for producing torsional excitation, said torsional excitation effecting lateral vibration in said electric machine; and wherein said one or more vibration sensors comprise an at least one lateral vibration sensor arranged for measuring the lateral vibration from said electric machine as excitation response and for producing lateral vibration data.

### BRIEF DESCRIPTION OF THE DRAWINGS

In the following, the present invention will be described in more detail by way of example and with reference to the attached drawings, in which:
Figure 1 illustrates an embodiment of an arrangement for identification of lateral vibration characteristics of an electric machine according to the present invention.
Figure 2 illustrates a flow diagram of an embodiment of a method for identification of lateral vibration characteristics of an electric machine according to the present invention.
Figure 3 illustrates another embodiment of an arrangement for identification of lateral vibration characteristics of an electric machine according to the present invention.
Figure 4 illustrates a flow diagram of another embodiment of a method for identification of lateral vibration characteristics of an electric machine according to the present invention.
Figure 5 illustrates a block diagram of a third embodiment of an arrangement for identification of lateral vibration characteristics of an electric machine according to the present invention.
Figure 6 illustrates a block diagram of a fourth embodiment of an arrangement for identification of lateral vibration characteristics of an electric machine according to the present invention.
Figure 7 illustrates a block diagram of a fifth embodiment of an arrangement for identification of lateral vibration characteristics of an electric machine according to the present invention.

The foregoing aspects, features and advantages of the invention will be apparent from the drawings and the detailed description related thereto.

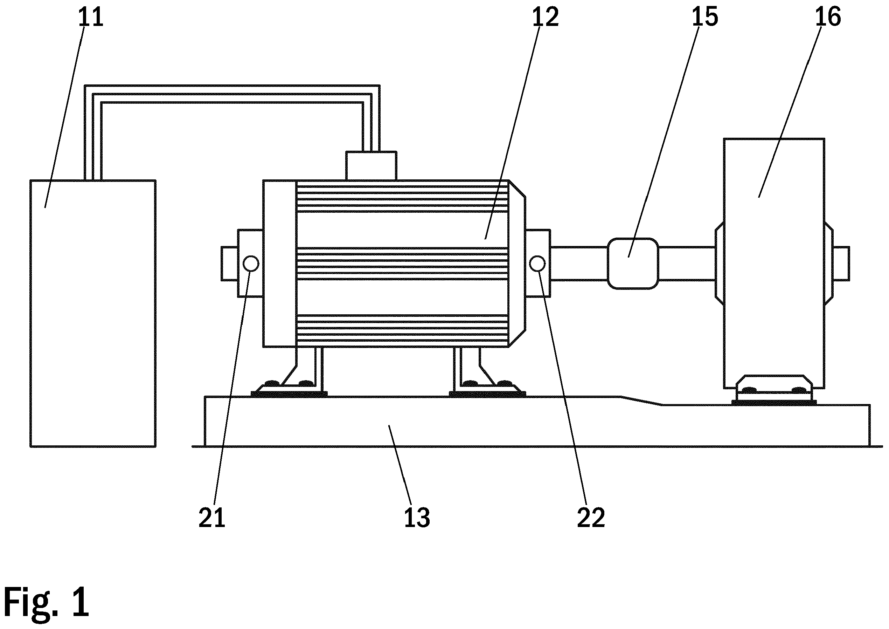

In the following, the invention will be described in greater detail by means of preferred embodiments with reference to the accompanying drawings of Figures 1 to 7.

### DETAILED DESCRIPTION

The arrangement for identification of lateral vibration characteristics of an electric machine according to one embodiment of the present invention comprises a frequency converter, one or more vibration sensors and an electric machine, wherein said frequency converter is arranged for producing torsional excitation, said torsional excitation effecting lateral vibration in said electric machine; and wherein said one or more vibration sensors comprise an at least one lateral vibration sensor arranged for measuring the lateral vibration from said electric machine as excitation response and for producing lateral vibration data.

Figure 1 illustrates an embodiment of an arrangement for identification of lateral vibration characteristics of an electric machine according to the present invention. The presented embodiment of an arrangement for identification of lateral vibration characteristics of an electric machine comprises a frequency converter 11 and an electric machine 12. In the presented embodiment said electric machine 12 is a motor 12, which motor 12 is installed on a motor foundation 13. In the presented embodiment, a driven/driving machine system 16 is connected to said motor 12 via a coupling arrangement 15. Whereas in the presented embodiment a driven machine 16 connected to said motor 12 is shown as a driven/driving machine 16, in another embodiment of the present invention the driven/driving machine 16 could be replaced by one or more driven/driving machine devices and/or one or more gears/ gear arrangements and/or one or more shafts/ shaft systems connected to said electric machine 12. Whereas in the presented embodiment a motor is shown as an electric machine, in another embodiment of the present invention the motor could be replaced by a generator as an electric machine.

In the present invention, the arrangement for identification of lateral vibration characteristics of an electric machine comprises a frequency converter, one or more vibration sensors and an electric machine. In the present invention, said one or more vibration sensors comprise an at least one lateral vibration sensor arranged to measure lateral vibration. Said at least one lateral vibration sensor may be arranged to measure lateral vibration at least in the horizontal direction. Said one or more vibration sensors may comprise one or more vibration sensors attached to the bearing/bearings of said electric machine.

In the presented embodiment, said arrangement for identification of lateral vibration characteristics of an electric machine comprises one or more vibration sensors 21-22. In the presented embodiment, said one or more vibration sensors 21-22 may comprise an at least one lateral vibration sensor 21-22 arranged to measure lateral vibration. Said at least one lateral vibration sensor 21-22 may be arranged to measure lateral vibration at least in the horizontal direction. Said one or more vibration sensors 21-22 may comprise sensors 21-22 installed on the motor 12, for example close to the ends of the motor 12, i.e. close to the motor bearings.

In the presented embodiment of an arrangement for identification of lateral vibration characteristics of an electric machine according to the present invention, the frequency converter 11 is used for producing torsional excitation, i.e. excitation torque. The produced torsional excitation is seen both on the rotor and on the stator side. Due to the properties of the electric machine and of the electric machine installation produced torsional excitation is also detected on the stator side as lateral vibration. This can be attributed to the asymmetry of a motor support system of said motor 12 installed on said motor foundation 13. Said torsional excitation produced by the frequency converter 11 generates excitation response detectable as lateral vibration in the motor. The lateral vibration of excitation response is thereafter measured from the motor as lateral vibration by said one or more vibration sensors 21-22.

In the presented embodiment, the frequency converter 11 produces torsional excitation, i.e. excitation torque thereafter utilized e.g. for modal testing and/or for condition monitoring. Said torsional excitation produced by the frequency converter 11 may comprise torsional excitation in the form of an impulse, random noise, pseudo random noise, a harmonic torsional excitation or a harmonic torsional excitation sweep. The frequency converter 11 also produces excitation data, said excitation data comprising data of the produced torsional excitation. The produced torsional excitation is seen both on the rotor and on the stator side. Essentially, the stator side excitation is seen roughly as a horizontal excitation due to the asymmetry of a motor support system of said motor 12 installed on said motor foundation 13.

The frequency converter 11 can produce the torsional excitation during any operational condition. In one embodiment, the frequency of harmonic torsional excitation is varied slowly but continuously through the frequency range of interest. This kind of a sine-sweep as a torsional excitation method may e.g. be utilized in modal testing.

In the presented embodiment said one or more vibration sensors 21-22 are arranged to measure the lateral vibration of excitation response from the motor as lateral vibration data. Said lateral vibration data may include vibration data in one or more lateral directions. Said one or more lateral directions may include the horizontal direction. With the help of the lateral vibration data, the lateral vibration characteristics of a motor can be identified.

The frequency converter 11 may also generate one or more frequency response functions utilizing said lateral vibration data together with said excitation data and identify the lateral vibration characteristics of the motor with the help of said lateral vibration data and said one or more generated frequency response functions.

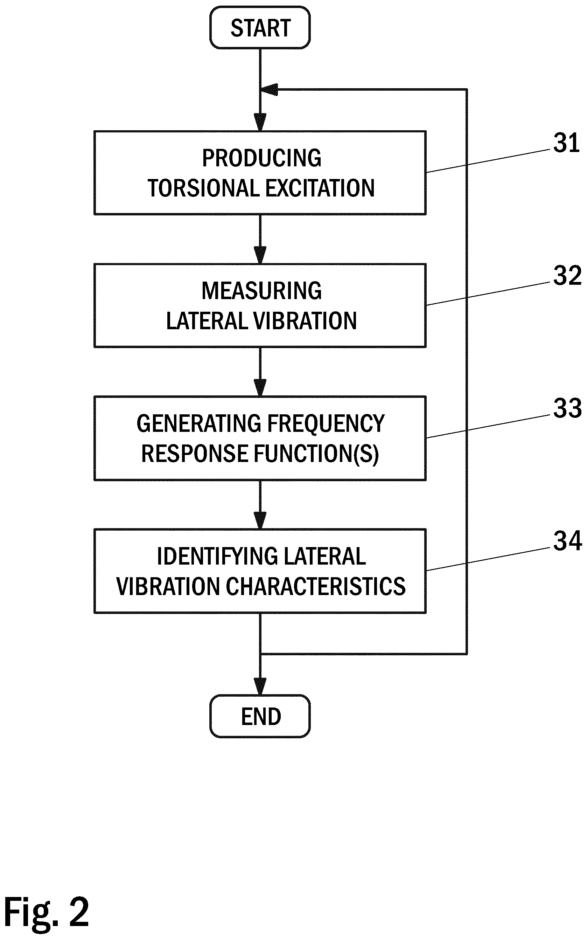

Figure 2 illustrates a flow diagram of an embodiment of a method for identification of lateral vibration characteristics of an electric machine according to the present invention. In the method according to the present embodiment, torsional excitation, i.e. excitation torque is first produced 31 with the help of a frequency converter 11. In the presented embodiment, the torsional excitation produced 31 by the frequency converter 11 may comprise torsional excitation in the form of an impulse, random noise, pseudo random noise, a harmonic torsional excitation or a harmonic torsional excitation sweep. The frequency converter 11 also produces excitation data, said excitation data comprising data of the produced torsional excitation.

The frequency converter 11 can produce the torsional excitation during any operational condition. In one embodiment, the frequency of harmonic excitation is varied slowly but continuously through the frequency range of interest. This kind of a sine-sweep as a torsional excitation method may e.g. be utilized in modal testing.

Thereafter, the lateral vibration of excitation response is measured 32 from the electric machine by one or more vibration sensors 21-24. When the lateral vibration of excitation response from the electric machine is measured 32, as a result lateral vibration data is produced.

In one embodiment of the present invention, lateral vibration characteristics of the electric machine are identified with the help of said lateral vibration data and excitation data, said excitation data comprising data of the produced torsional excitation.

In the presented embodiment of Figure 2, as the next step, one or more frequency response functions are generated 33 utilizing said lateral vibration data together with said excitation data. Thereafter, with the help of the lateral vibration data and the generated one or more frequency response functions, lateral vibration characteristics of the electric machine are then identified 34. In the identifying 34 of the lateral vibration characteristics of the electric machine, the lateral vibration data can be post-processed to produce the modal parameters, i.e. the natural mode shapes, natural frequencies and damping of each mode. There are several alternatives for the post-processing of the measured data. The simplest methods extract for example only the resonance frequencies. The advanced methods extract a full modal behaviour including the mode shapes and damping. The lateral vibration characteristics of the electric machine may comprise modal properties of the electric machine including vibration frequencies, vibration levels and intensities and modal shapes of the vibration. The lateral vibration characteristics of the electric machine may be utilized for determining the foundation properties as well as mining the condition of the rotor, the stator or the frame of the electric machine. In the method according to the present embodiment, the steps of producing torsional excitation 31, measuring lateral vibration 32, generating frequency response function/functions 33 and identifying lateral vibration characteristics 34 are repeated several times in a continuous loop, as deemed necessary.

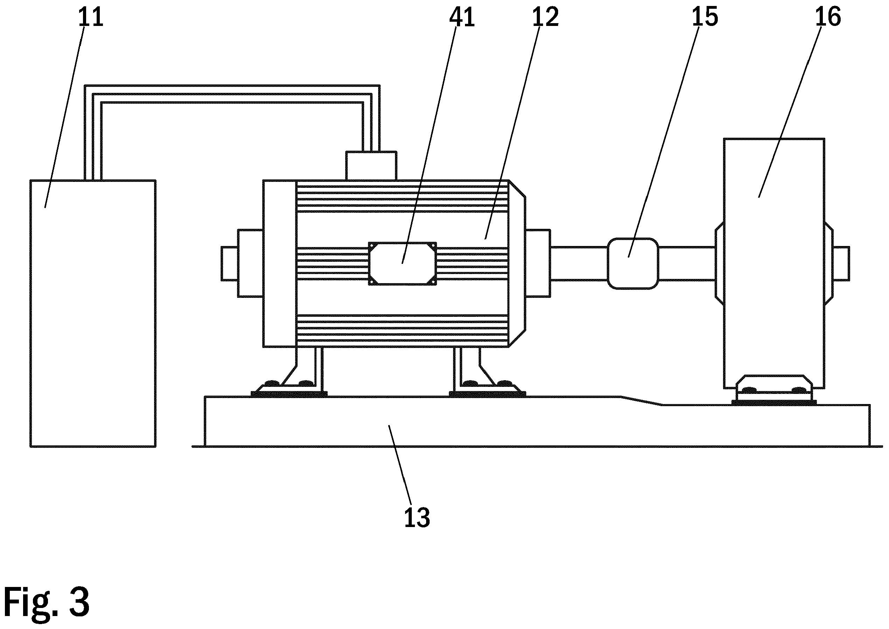

Figure 3 illustrates another embodiment of an arrangement for identification of lateral vibration characteristics of an electric machine according to the present invention. The presented another embodiment of an arrangement for identification of lateral vibration characteristics of an electric machine comprises a frequency converter 11 and an electric machine 12. In the presented embodiment said electric machine 12 is a motor 12, which motor 12 is installed on a motor foundation 13. In the presented embodiment, a driven/driving machine system 16 is connected to said motor 12 via a coupling arrangement 15. Whereas in the presented embodiment a driven machine 16 connected to said motor 12 is shown as a driven/driving machine 16, in another embodiment of the present invention the driven/driving machine 16 could be replaced by one or more driven/driving machine devices and/or one or more gears/ gear arrangements and/or one or more shafts/ shaft systems connected to said electric machine 12. Whereas in the presented embodiment a motor is shown as an electric machine, in another embodiment of the present invention the motor could be replaced by a generator as an electric machine.

In the presented another embodiment, said arrangement for identification of lateral vibration characteristics of an electric machine comprises one or more vibration sensors 41. In the presented another embodiment, said one or more vibration sensors 41 may comprise an at least one lateral vibration sensor 41 arranged to measure lateral vibration. Said at least one lateral vibration sensor 41 may be arranged to measure lateral vibration at least in the horizontal direction. Said one or more vibration sensors 41 may comprise a sensor 41 installed on said motor 12. Said sensor 41 installed on the motor 12 may e.g. be a wireless sensor 41 arranged to measure vibration and arranged to transfer at least the lateral vibration data wirelessly. Said sensor 41 installed on the motor 12 may e.g. be a sensor 41 attached to the frame of said motor 12 with a clamping bracket. Said sensor installed on the motor 12 may also be a sensor 41 attached to said motor 12 with mounting clips, mounting brackets, mounting studs, adhesive mounting adapters, mounting screws or other fastening means. Said sensor 41 installed on the motor 12 may be arranged to measure vibration at least in the horizontal direction.

Said one or more vibration sensors 41 may also comprise a sensor installed on the bearing arrangement of the motor or on a bearing housing. Said sensor installed on the bearing housing 17 may e.g. be a wireless sensor arranged to measure vibration and arranged to transfer at least the lateral vibration data wirelessly. Said sensor installed on the on the bearing housing may e.g. be a sensor screwed on to a threaded receptacle on the bearing housing.

In the presented another embodiment of an arrangement for identification of lateral vibration characteristics of an electric machine according to the present invention, the frequency converter 11 is used for producing torsional excitation, i.e. excitation torque. The produced torsional excitation is seen both on the rotor and on the stator side. Due to the properties of the electric machine and of the electric machine installation produced torsional excitation is also detected on the stator side as lateral vibration. This can be attributed to the asymmetry of a motor support system of said motor 12 installed on said motor foundation 13. The frequency converter 11 also produces excitation data, said excitation data comprising data of the produced torsional excitation. Said torsional excitation produced by the frequency converter 11 generates excitation response detectable as lateral vibration in the motor. The lateral vibration of excitation response is thereafter measured from said motor by said one or more vibration sensors 41. In the presented another embodiment said one or more vibration sensors 41 are arranged to measure the lateral vibration of excitation response from the motor as lateral vibration data. Said lateral vibration data may include vibration data in one or more lateral directions. Said one or more lateral directions may include the horizontal direction. With the help of the lateral vibration data, the lateral vibration characteristics of a motor can be identified.

The frequency converter 11 may also generate one or more frequency response functions utilizing said lateral vibration data together with said excitation data and identify the lateral vibration characteristics of the motor with the help of said lateral vibration data and said generated one or more frequency response functions.

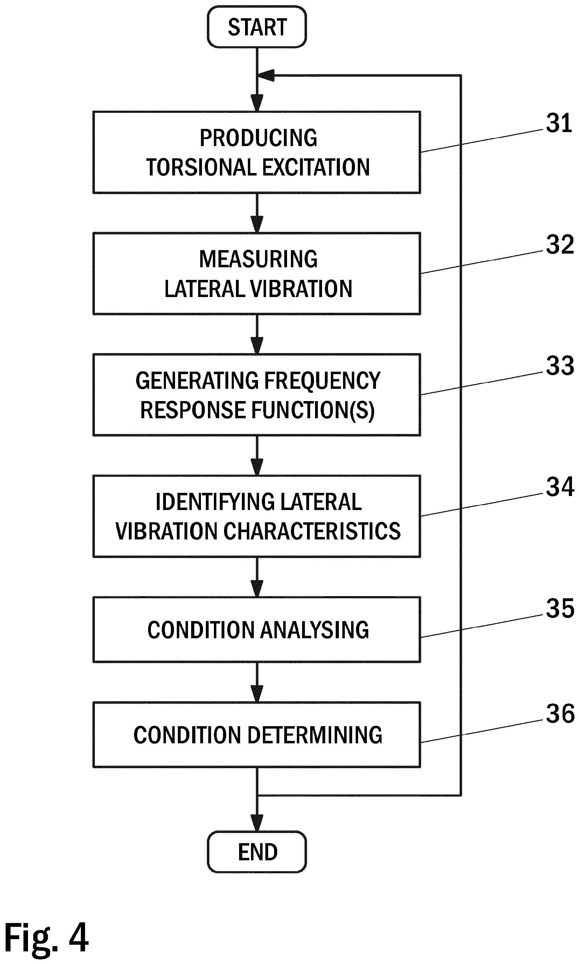

Figure 4 illustrates a flow diagram of another embodiment of a method for identification of lateral vibration characteristics of an electric machine according to the present invention. In the method according to the present another embodiment, torsional excitation, i.e. excitation torque is first produced 31 with the help of a frequency converter 11. In the presented another embodiment, the torsional excitation produced 31 by the frequency converter 11 may comprise torsional excitation in the form of an impulse, random noise, pseudo random noise, a harmonic torsional excitation or a harmonic torsional excitation sweep. The frequency converter 11 also produces excitation data, said excitation data comprising data of the produced torsional excitation. The frequency converter 11 can produce the torsional excitation during any operational condition. In an embodiment, the frequency of harmonic torsional excitation is varied slowly but continuously through the frequency range of interest.

Thereafter, the lateral vibration of excitation response is measured 32 from the electric machine by one or more vibration sensors 21-24, 41. When the lateral vibration of excitation response from the electric machine is measured 32, as a result lateral vibration data is produced.

In one embodiment of the present invention, lateral vibration characteristics of the electric machine are identified with the help of said lateral vibration data and excitation data, said excitation data comprising data of the produced torsional excitation.

In the presented embodiment of Figure 4, as the next step, one or more frequency response functions are generated 33 utilizing said lateral vibration data together with said excitation data.

Thereafter, with the help of the lateral vibration data and the generated one or more frequency response functions, lateral vibration characteristics of the electric machine are then identified 34. In the identifying 34 of the lateral vibration characteristics of the electric machine, the lateral vibration data can be post-processed to produce the modal parameters, i.e. the natural mode shapes, natural frequencies and damping of each mode. There are several alternatives for the post-processing of the measured data. The simplest methods extract for example only the resonance frequencies. The advanced methods extract a full modal behaviour including the mode shapes and damping. The lateral vibration characteristics of the electric machine may comprise modal properties of the electric machine including vibration frequencies, vibration levels and intensities and modal shapes of the vibration. The lateral vibration characteristics of the electric machine may be utilized for determining the foundation properties as well as mining the condition of the rotor, the stator or the frame of the electric machine.

As the next step, in the presented another embodiment method for identification of lateral vibration characteristics of an electric machine according to the present invention, the condition of the electric machine is analysed 35 utilizing said determined lateral vibration characteristics of the electric machine. When the condition of the electric machine is analysed 35, as a result condition analysis of the electric machine is produced. Thereafter, with the help of the produced condition analysis of the electric machine, the condition of the electric machine is then determined 36. In the method according to the present embodiment, the steps of producing torsional excitation 31, measuring lateral vibration 32, generating frequency response function/functions 33, identifying lateral vibration characteristics 34, condition analysing 35 and condition determining 36 are repeated several times in a continuous loop, as deemed necessary.

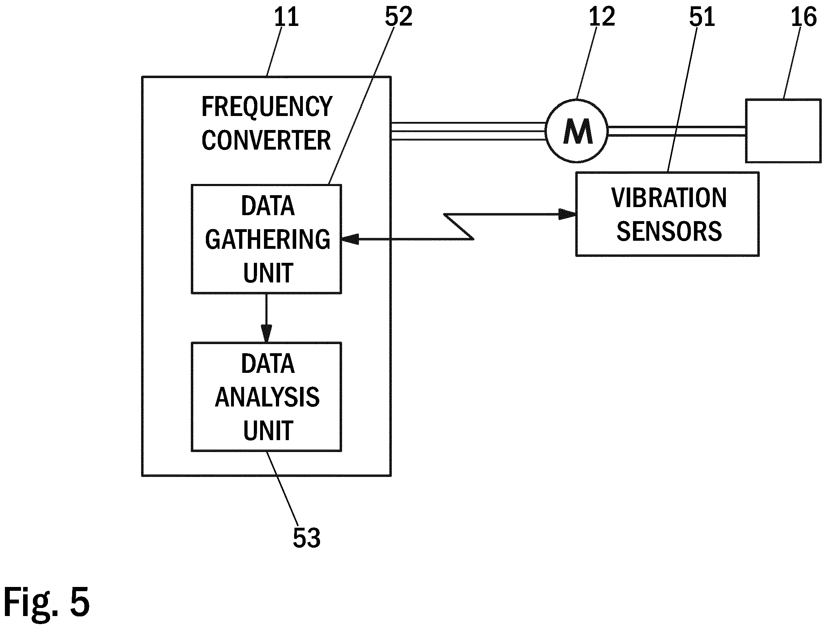

Figure 5 illustrates a block diagram of a third embodiment of an arrangement for identification of lateral vibration characteristics of an electric machine according to the present invention. The presented third embodiment of an arrangement for identification of lateral vibration characteristics of an electric machine comprises a frequency converter 11, an electric machine 12 and a driven/driving machine system 16 connected to said electric machine 12. The presented third embodiment of an arrangement for identification of lateral vibration characteristics of an electric machine comprises one or more vibration sensors 51 installed on the electric machine. In the presented third embodiment, said one or more vibration sensors 51 may comprise an at least one lateral vibration sensor 51 arranged to measure lateral vibration as lateral vibration data. Said at least one lateral vibration sensor 51 may be arranged to measure lateral vibration at least in the horizontal direction. Whereas in the presented embodiment a driven machine 16 connected to a motor 12 is shown as a driven/driving machine system 16, in another embodiment of the present invention the driven/driving machine system 16 could be replaced by one or more driven/driving machine devices and/or one or more gears/ gear arrangements and/or one or more shafts/ shaft systems connected to said electric machine 12. Whereas in the presented embodiment a motor is shown as an electric machine, in another embodiment of the present invention the motor could be replaced by a generator as an electric machine.

In presented third embodiment of an arrangement for identification of lateral vibration characteristics of an electric machine, the vibration data gathering and analysis is implemented on the frequency converter 11. In the presented third embodiment, the frequency converter 11 comprises a data gathering unit 52 and a data analysis unit 53.

Said data gathering unit 52 gathers data related to the identifying lateral vibration characteristics of an electric machine, i.e. of a motor, said gathered data including control data for motor 12 and lateral vibration data of the motor. Said control data for motor 12 includes excitation control data for producing torsional excitation, i.e. excitation torque. The produced torsional excitation is seen both on the rotor and on the stator side. Due to the properties of the electric machine and of the electric machine installation produced torsional excitation is also detected on the stator side as lateral vibration. This can be attributed to the asymmetry of a motor support system of said motor 12 installed on a motor foundation.

Said lateral vibration data of the motor includes lateral vibration data received from the vibration sensors 51. Said data gathering unit 52 of the frequency converter 11 may receive said lateral vibration data from the vibration sensors 51 wirelessly.

The data gathering unit 52 then sends the gathered data to the data analysis unit 53. The data analysis unit 53 then analyses said gathered data and identifies, according to the present disclosure, the lateral vibration characteristics of the motor and/or the condition of the motor.

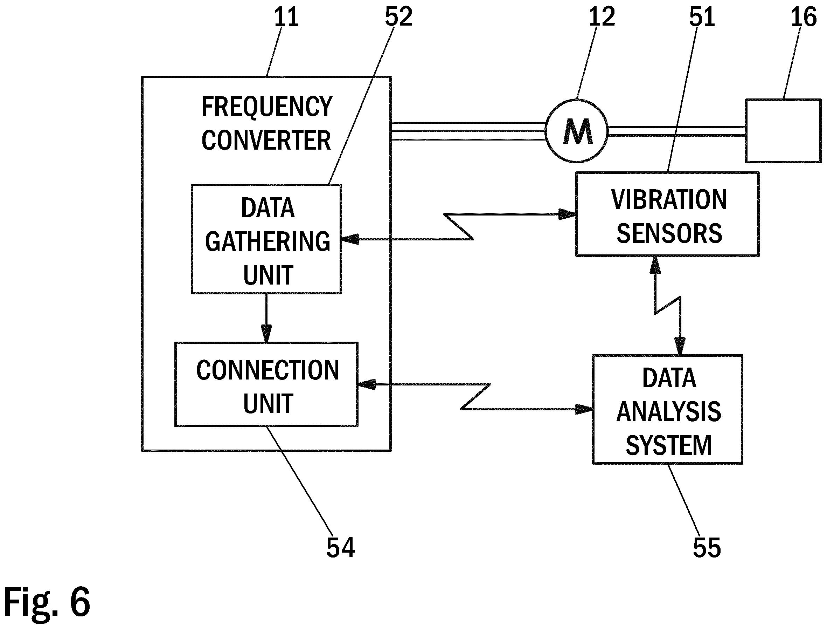

Figure 6 illustrates a block diagram of a fourth embodiment of an arrangement for identification of lateral vibration characteristics of an electric machine according to the present invention. The presented fourth embodiment of an arrangement for identification of lateral vibration characteristics of an electric machine comprises a frequency converter 11, an electric machine 12 and a driven/driving machine system 16 connected to said electric machine 12. The presented fourth embodiment of an arrangement for identification of lateral vibration characteristics of an electric machine comprises one or more vibration sensors 51. In the presented fourth embodiment, said one or more vibration sensors 51 may comprise an at least one lateral vibration sensor 51 arranged to measure lateral vibration as lateral vibration data. Said at least one lateral vibration sensor 51 may be arranged to measure lateral vibration at least in the horizontal direction. Whereas in the presented embodiment a driven machine 16 connected to a motor 12 is shown as a driven/driving machine system 16, in another embodiment of the present invention the driven/driving machine system 16 could be replaced by one or more driven/driving machine devices and/or one or more gears/ gear arrangements and/or one or more shafts/ shaft systems connected to said electric machine 12. Whereas in the presented embodiment a motor is shown as an electric machine, in another embodiment of the present invention the motor could be replaced by a generator as an electric machine.

In presented fourth embodiment of an arrangement for identification of lateral vibration characteristics of an electric machine, the vibration data analysis is implemented on an external data analysis system 55. Said external data analysis system 55 may be realized as a partially external data analysis system or as an entirely external data analysis system. In the presented fourth embodiment, the frequency converter 11 comprises a data gathering unit 52 and a connection unit 54.

Said data gathering unit 52 gathers data related to the identifying lateral vibration characteristics of an electric machine, i.e. of a motor, said gathered data including at least control data for motor 12. Said control data for motor 12 includes excitation control data for producing torsional excitation, i.e. excitation torque. The produced torsional excitation is seen both on the rotor and on the stator side. Due to the properties of the electric machine and of the electric machine installation produced torsional excitation is also detected on the stator side as lateral vibration. This can be attributed to the asymmetry of a motor support system of said motor 12 installed on a motor foundation. Said gathered data may include the lateral vibration data of the motor received from the vibration sensors 51. Said data gathering unit 52 of the frequency converter 11 may receive said lateral vibration data from the vibration sensors 51 wirelessly.

The data gathering unit 52 then forwards said gathered data to the connection unit 54. The connection unit 54 is arranged to receive said gathered data from the data gathering unit 52 and to transmit said gathered data to said data analysis system 55.

The data analysis system 55 is arranged to receive said gathered data from the connection unit 54 of the frequency converter 11. The data analysis system 55 may be implemented in a computer. Said computer may be a laptop, a desktop computer, or a cluster of computer servers, for example. The connection unit 54 may connect to said computer via one or more known communication networks, such as Ethernet, for example. The data analysis system 55 may also receive said lateral vibration data directly from the vibration sensors 51. The data analysis system 55 then analyses said gathered data and identifies, according to the present disclosure, the lateral vibration characteristics of the motor and/or the condition of the motor.

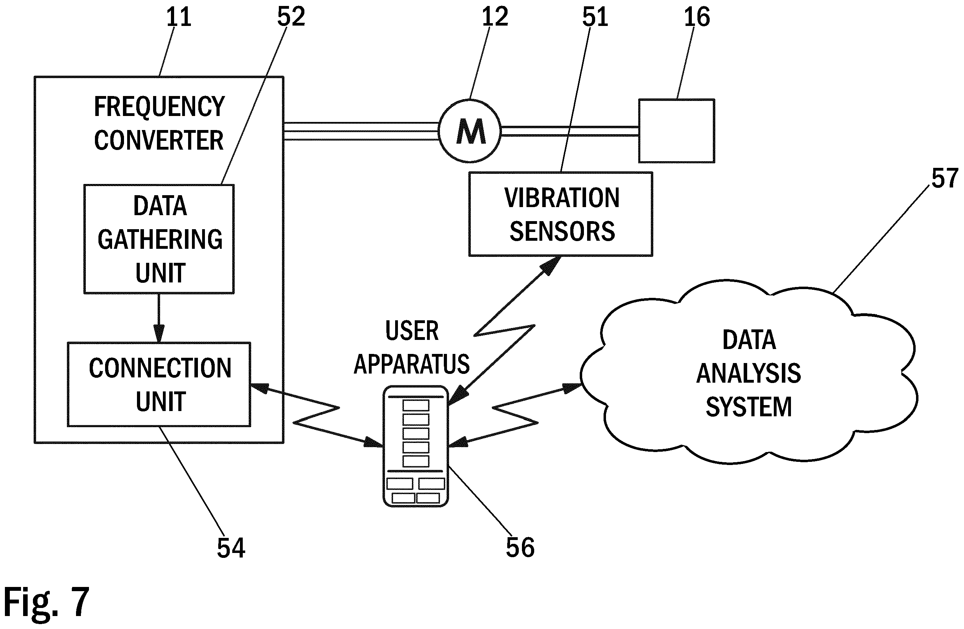

Figure 7 illustrates a block diagram of a fifth embodiment of an arrangement for identification of lateral vibration characteristics of an electric machine according to the present invention. The presented fifth embodiment of an arrangement for identification of lateral vibration characteristics of an electric machine comprises a frequency converter 11, an electric machine 12, a driven/driving machine system 16 connected to said electric machine 12, a user apparatus 56 and an external data analysis system 57. The presented fifth embodiment of an arrangement for identification of lateral vibration characteristics of an electric machine comprises one or more vibration sensors 51. In the presented fifth embodiment, said one or more vibration sensors 51 may comprise an at least one lateral vibration sensor 51 arranged to measure lateral vibration as lateral vibration data. Said at least one lateral vibration sensor 51 may be arranged to measure lateral vibration at least in the horizontal direction. In the presented fifth embodiment said external data analysis system 57 is implemented as an external cloud computing service. Whereas in the presented embodiment a driven machine 16 connected to a motor 12 is shown as a driven/driving machine system 16, in another embodiment of the present invention the driven/driving machine system 16 could be replaced by one or more driven/driving machine devices and/or one or more gears/ gear arrangements and/or one or more shafts/ shaft systems connected to said electric machine 12. Whereas in the presented embodiment a motor is shown as an electric machine, in another embodiment of the present invention the motor could be replaced by a generator as an electric machine.

In presented fifth embodiment of an arrangement for identification of lateral vibration characteristics of an electric machine, the vibration data analysis is implemented on an external data analysis system 57. Said external data analysis system 57 may be realized as a partially external data analysis system or as an entirely external data analysis system. In the presented fifth embodiment, the frequency converter 11 comprises a data gathering unit 52 and a connection unit 54.

Said data gathering unit 52 gathers data related to the identifying lateral vibration characteristics of an electric machine, i.e. of a motor, said gathered data including at least control data for motor 12. Said control data for motor 12 includes excitation control data for producing torsional excitation, i.e. excitation torque. The produced torsional excitation is seen both on the rotor and on the stator side. Due to the properties of the electric machine and of the electric machine installation produced torsional excitation is also detected on the stator side as lateral vibration. This can be attributed to the asymmetry of a motor support system of said motor 12 installed on a motor foundation. Said user apparatus 56 receives said lateral vibration data from the vibration sensors 51 wirelessly.

The data gathering unit 52 then forwards said gathered data to the connection unit 54. The connection unit 54 is arranged to receive said gathered data from the data gathering unit 52 and to transmit said gathered data to said data analysis system 57 via said user apparatus 56. So first, the connection unit 54 receives said gathered data from the data gathering unit 52 and transmits said gathered data to said user apparatus 56.

The connection unit 54 is configured to establish a connection with said user apparatus 56. The connection unit 54 may communicate with said user apparatus 56 via standard wireless communication protocols, for example. The connection unit 54 may establish the communication link via Bluetooth, ZigBee, near field communication (NFC), or infrared protocols, for example.

The user apparatus 56 may be a handheld communication device, such as a smart phone or a tablet computer. The user apparatus 56 may be arranged to receive said gathered data from the connection unit 54 of the frequency converter 11 and to forward said gathered data to said external data analysis system 57. Said external data analysis system 57 may be implemented as an external cloud computing service. The user apparatus 56 may be arranged to communicate with said external data analysis system 57 through wireless networks, such as cell phone networks or WLAN.

The data analysis system 57 is arranged to receive said gathered data from the user apparatus 56. The data analysis system 57 may also be arranged to receive user input from the user apparatus 56. The data analysis system 57 then analyses said gathered data and identifies, according to the present disclosure, the lateral vibration characteristics of the electric machine and/or the condition of the electric machine.

The identified lateral vibration characteristics of the electric machine may comprise the resonance frequencies of the electric machine. Furthermore, the identified lateral vibration characteristics of the electric machine may comprise the modal parameters of the electric machine, i.e. the natural mode shapes, natural frequencies and damping of each mode.

A digital twin application may be utilized in the process of identification of the modal parameters of the electric machine. A digital twin application is a complete and operational virtual representation of an asset, subsystem or system, combining digital aspects of how the equipment is built, i.e product lifecycle management data, design models, manufacturing data, with real-time aspects of how it is operated and maintained. The capability to refer to data stored in different places from one common digital twin directory enables simulation, diagnostics, prediction and other advanced use cases. Furthermore, said identified lateral vibration characteristics may be utilized for improving the digital twin application.

With the help of the method and an arrangement for identification of lateral vibration characteristics of an electric machine according to the present invention the identification of the lateral vibration characteristics of an electric machine is easier and more efficient, especially in operational condition.

Furthermore, the method and an arrangement for identification of lateral vibration characteristics of an electric machine according to the present invention provides easy and efficient of identifying of the lateral vibration characteristics of said electric machine which is also useful in determining the condition of said electric machine.

When referring to the term "lateral vibration characteristics of an electric machine", in this application it is meant to refer to lateral vibration characteristics of an electric machine as installed on an installation.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. A method for identification of lateral vibration characteristics of an electric machine (12), in which method:
- torsional excitation is produced (31) by a frequency converter (11), said torsional excitation effecting lateral vibration in said electric machine; and
- lateral vibration of excitation response from said electric machine is measured (32) by one or more vibration sensors (21-22, 41, 51) as lateral vibration data.

2. A method according to claim 1, in which method lateral vibration characteristics of the electric machine are identified with the help of said lateral vibration data and excitation data, said excitation data comprising data of the produced torsional excitation.

3. A method according to claim 1, in which method:
- one or more frequency response functions are generated (33) utilizing said lateral vibration data and excitation data, said excitation data comprising data of the produced torsional excitation; and
- lateral vibration characteristics of the electric machine are identified (34) with the help of said lateral vibration data and said generated one or more frequency response functions.

4. A method according to any of the claims 1-3, wherein said torsional excitation comprises torsional excitation in the form of an impulse, random noise, pseudo random noise, a harmonic torsional excitation or a harmonic torsional excitation sweep.

5. A method according to any of the claims 1-4, wherein said lateral vibration characteristics of the electric machine comprise the modal parameters of the electric machine.

6. A method according to any of the claims 1-5, wherein the condition of the electric machine is analysed (35) and determined (36) utilizing said identified lateral vibration characteristics of the electric machine.

7. An arrangement for identification of lateral vibration characteristics of an electric machine, said arrangement comprising a frequency converter (11), one or more vibration sensors (21-22, 41, 51) and an electric machine (12),
- wherein said frequency converter (11) is arranged for producing torsional excitation, said torsional excitation effecting lateral vibration in said electric machine; and
- wherein said one or more vibration sensors (21-22, 41, 51) comprise an at least one lateral vibration sensor (21-22, 41, 51) arranged for measuring the lateral vibration from said electric machine as excitation response and for producing lateral vibration data.

8. An arrangement according to claim 7, wherein said at least one lateral vibration sensor (21-22, 41, 51) is arranged to measure lateral vibration at least in the horizontal direction.

9. An arrangement according to claim 7 or claim 8, wherein said frequency converter (11) is arranged for identifying the lateral vibration characteristics of the electric machine with the help of said lateral vibration data and excitation data, said excitation data comprising data of the produced torsional excitation.

10. An arrangement according to claim 7 or claim 8, wherein said frequency converter (11) is arranged for generating one or more frequency response functions utilizing said lateral vibration data and excitation data, said excitation data comprising data of the produced torsional excitation; and for identifying the lateral vibration characteristics of the electric machine with the help of said lateral vibration data and said generated one or more frequency response functions.

11. An arrangement according to any of the claims 7-10, wherein said one or more vibration sensors (21-22, 41, 51) comprise one or more vibration sensors attached to the bearing/bearings of said electric machine (12).

12. An arrangement according to any of the claims 7-11, wherein said frequency converter (11) comprises:
- a data gathering unit (52) arranged for gathering data, said gathered data including control data for said electric machine (12) and lateral vibration data of said electric machine; and
- a data analysis unit (53) arranged for analysing said gathered data and for identifying the lateral vibration characteristics of said electric machine and/or the condition of said electric machine.

13. An arrangement according to any of the claims 7-11, wherein said arrangement comprises a data analysis system (55, 57), and wherein said frequency converter (11) comprises:
- a data gathering unit (52) arranged for gathering data, said gathered data including control data for said electric machine (12) and lateral vibration data of said electric machine; and
- a connection unit (54) arranged for transmitting said gathered data to said data analysis system (55, 57),
- wherein said data analysis system (55, 57) is arranged for analysing said gathered data and for identifying the lateral vibration characteristics of said electric machine and/or the condition of said electric machine.

14. An arrangement according to claim 13, wherein said arrangement comprises a user apparatus (56), and
- wherein said connection unit (54) arranged for transmitting said gathered data to said data analysis system (55, 57) via said user apparatus (56), and
- wherein said user apparatus (56) is arranged for receiving lateral vibration data of said electric machine from said one or more vibration sensors (21-22, 41, 43-44, 51) and for receiving said gathered data from said connection unit (54) and for forwarding said gathered data to said data analysis system (55, 57).

15. A frequency converter (11) of an arrangement according to any of the claims 7-14.
